# FASCICULE DE BREVET EUROPEEN

(11) **EP 1 821 261 B1**
(45) Date de publication et mention de la délivrance du brevet: **13.07.2011**
(21) Numéro de dépôt: 07002596.0
(22) Date de dépôt: 07.02.2007
(51) Int. Cl.: G07C 9/00

(54) **Procédé et dispositif de condamnation automatique des portes d'un véhicule**
Verfahren und Vorrichtung zur automatischen Verriegelung der Türen eines Fahrzeugs
Method and device for automatically locking the doors of a vehicle

(30) Priorité: 21.02.2006 FR 0601495
(43) Date de publication de la demande: 22.08.2007
(73) Titulaire: Continental Automotive France, 31100 Toulouse (FR)
(72) Inventeur: Brillon, Alain, 31270 Villeneuve Tolosane (FR)
(74) Mandataire: Bonn, Roman Klemens

(56) Documents cités:
- FR-A- 2 837 964
- FR-A1- 2 847 610
- US-A1- 2005 038 574

## Description

La présente invention appartient au domaine des dispositifs de condamnation et de décondamnation des issues des véhicules. Plus particulièrement l'invention concerne un procédé de condamnation-décondamnation à distance des issues d'un véhicule par un dispositif dit mains libres et qui évite la condamnation intempestive des issues dans des situations où une telle condamnation n'est pas souhaitée.

Pour interdire ou autoriser l'accès à un véhicule il est de plus en plus fréquemment fait appel à des dispositifs de commande à distance qui condamne les issues du véhicule en émettant un signal qui est reçu par le véhicule avec pour effet de commander la fermeture des verrous sur les différentes issues ou qui au contraire autorise l'accès au véhicule en émettant un signal, également reçu par le véhicule, avec pour effet de commander ou d'autoriser l'ouverture des verrous des issues.

Parmi les systèmes connus de condamnation-décondamnation des issues d'un véhicule, les systèmes dits mains libres sont particulièrement appréciés des utilisateurs car ne nécessitant aucune intervention de leur part lorsqu'ils veulent accéder à leur véhicule ou quitter celui-ci de manière sécurisée.
De tels systèmes mains libres sont en général basés sur la détection à proximité du véhicule d'un émetteur-récepteur portable, dit identifiant, porté par la personne devant accéder à l'intérieur du véhicule. Cet identifiant fonctionne suivant le principe des transpondeurs ; il émet des signaux en fonction de signaux reçus.

Ainsi dans une première étape un équipement à bord du véhicule émet un premier signal, porteur d'un code d'identification, à intervalles réguliers. Ce premier signal est reçu par l'identifiant si ce dernier est suffisamment proche du véhicule. Les puissances émises par l'émetteur du véhicule et la sensibilité de l'identifiant permettent de fixer en pratique à quelques mètres la distance à partir de laquelle l'identifiant détectera le signal.

Dans une seconde étape l'identifiant, lorsqu'il est appairé au véhicule (c'est à dire lorsqu'il identifie le signal reçu comme lui étant destiné grâce au code d'identification), qui reçoit des signaux réagit en émettant lui-même des signaux, codés pour des raisons de sécurité qui sont reçus et interprétés par le véhicule. Les signaux émis par l'identifiant en réponse au signal émis par le véhicule seront interprétés par l'équipement à bord du véhicule comme la proximité de l'identifiant et comme devant autoriser l'accès au véhicule.

Lorsque l'identifiant qui recevait les signaux du véhicule auquel il est appairé ne reçoit plus de signaux, il émet un second signal portant une information qui est interprétée par le véhicule qui la reçoit comme un éloignement de l'identifiant et comme devant condamner l'accès au véhicule. Bien évidemment pour un fonctionnement satisfaisant le second signal émis par l'identifiant doit être reçu par le véhicule alors que l'identifiant ne détecte plus le premier signal émis par le véhicule en raison de son éloignement du véhicule.

Pour obtenir ce résultat, outre les puissances émises par le véhicule et l'identifiant, on utilise le plus souvent des émetteurs radioélectriques pour le véhicule dans le domaine des basses fréquences, dites LF (pour Low Frequency), par exemple de la gamme des 125 kHz, et pour l'identifiant des fréquences du domaine radio, dites RF (pour Radio Frequency), par exemple de la gamme des 433 MHz.

Ce choix permet entre autre de réaliser des identifiants de petites dimensions qui peuvent être intégrés dans des badges ou dans d'autres supports.

Un fonctionnement détaillé d'un système mains libres de condamnation-décondamnation d'un véhicule est décrit dans la demande de brevet française publiée sous le numéro 2 847 610.

Dans cette demande le système utilise un identifiant qui mesure le niveau du signal reçu depuis le véhicule et qui émet un signal à destination du véhicule qui dépend du niveau du signal reçu.

Cependant, dans de tels systèmes connus, l'identifiant émet un second signal en vue de la condamnation des issues lorsque le signal LF émis par le véhicule n'est plus reçu même si l'identifiant est encore dans une zone où il aurait du recevoir le signal LF mais n'est plus en mesure de détecter ledit signal LF. Cette situation est particulièrement gênante car les issues du véhicule peuvent se retrouver condamnées alors que l'identifiant est à l'intérieur du véhicule, par exemple dans une veste ou un sac déposé dans le véhicule, alors que le ou les occupants supposés du véhicule sont à l'extérieur et se retrouve dans l'impossibilité d'y pénétrer.

La cause la plus probable, en dehors des situations de pannes, pour laquelle le premier signal LF émis par le véhicule n'est plus reçu dans le périmètre normal de réception est la présence de signaux perturbateurs dans la gamme de fréquence du signal LF.

La présence de tels signaux est de plus en plus fréquente en raison des nombreux équipements fixes ou mobiles, tels que des téléphones cellulaires, des récepteurs GPS, des jeux vidéo, etc., pouvant être à proximité de l'identifiant.

Si l'intensité de ces signaux non désirés près de l'identifiant est anormalement élevée, du même ordre ou supérieure à celle du signal LF devant être reçu, le récepteur de l'identifiant ne sera pas en mesure de distinguer le signal utile parmi le bruit radioélectrique.

Afin d'éliminer un tel risque, ou pour le moins de le réduire à un niveau très faible pour lequel il devient acceptable, l'invention propose un procédé de condamnation-décondamnation mains libres des issues d'un véhicule qui comporte de façon connue : 1
a) l'émission par un équipement embarqué à bord du véhicule d'un premier signal radioélectrique, dit signal de requête ;
b) l'émission par un identifiant, mobile par rapport au véhicule, d'un second signal radioélectrique, dit signal de présence, en réponse à la réception du signal de requête ;
c) l'émission par l'identifiant d'un troisième signal radioélectrique, dit signal de condamnation, en absence de réception du signal de requête dans un intervalle de temps où un tel signal de requête est attendu ;
d) au moins une mesure par l'identifiant de l'intensité du champ radioélectrique environnant ledit identifiant dans le domaine de fréquences du signal de requête lorsque le signal de requête attendu n'est pas reçu ;
   et qui, contrairement aux dispositifs connus comporte en outre :
e) l'inhibition de l'émission du signal de condamnation, c'est à dire la non-réalisation de l'étape c) du procédé connu, si l'intensité du champ radioélectrique est supérieure à une valeur seuil.

Ainsi lorsque le signal de requête ne peut être détecté en raison d'un bruit radioélectrique d'un niveau anormalement élevé, l'identifiant n'émet pas le signal devant déclencher la condamnation des issues du véhicule.

Avantageusement le champ radioélectrique est mesuré à l'expiration d'un délai δt pendant lequel un signal de requête attendu n'a pas été reçu par l'identifiant.

De manière alternative, afin d'obtenir une information plus complète du niveau de bruit radioélectrique ambiant, l'intensité du champ radioélectrique comparée à la valeur seuil est déduite d'une ou de plusieurs mesures de l'intensité du champ radioélectrique effectuées avant l'expiration d'un délai δt pendant lequel un signal de requête attendu n'a pas été reçu par l'identifiant.

Lorsque le signal de condamnation est inhibé l'identifiant n'émet aucun signal ou bien émet un signal de présence pour que l'équipement embarqué soit informé de la présence de l'identifiant si celui-ci est effectivement dans son périmètre de réception.

Avantageusement, lorsqu'un signal de condamnation est inhibé et que l'identifiant émet un signal de présence, ce signal de présence contient une information, destinée à être traitée par l'équipement embarqué, caractéristique du fait que ledit signal de présence est émis en absence de réception d'un signal de requête et en présence d'un niveau de bruit anormalement élevé dans le domaine des fréquences du signal de requête.

La valeur seuil de l'intensité mesurée du champ radioélectrique, au-dessus de laquelle l'émission du signal de condamnation est inhibée, est fixe ou bien est fixé par l'identifiant à partir des contenus de signaux transmis par l'équipement embarqué.

Pour mettre en oeuvre le procédé, l'invention concerne également un dispositif de condamnation-décondamnation mains libres des issues d'un véhicule qui comporte :
- un équipement embarqué dans le véhicule apte à émettre un signal radioélectrique périodique dit signal de requête ;
- au moins un identifiant mobile par rapport au véhicule apte à recevoir le signal de requête, apte à émettre un signal radioélectrique ou signal de présence en réponse à la réception d'un signal de requête et apte à émettre au moins un signal radioélectrique ou signal de condamnation lorsque l'identifiant cesse de recevoir des signaux de requête ;
ledit identifiant mobile comportant:
- des moyens de mesure du champ radioélectrique B dans le domaine de fréquences des signaux de requête,
- des moyens pour comparer la valeur (12) du champ radioélectrique B mesuré avec une valeur seuil S, et
- des moyens pour inhiber l'émission du signal de condamnation (21) lorsque ladite valeur du champ radioélectrique mesurée est supérieure audit seuil S, lorsqu'un signal de requête (10) attendu n'est pas reçu.

Afin de vérifier si le signal n'ayant pas été reçu peut avoir été masqué par le bruit radioélectrique, le au moins un identifiant comporte des moyens pour comparer la valeur du champ radioélectrique mesuré ou estimé à partir de mesures avec une valeur seuil et pour inhiber l'émission du signal de condamnation dans le cas où ladite valeur du champ radioélectrique est supérieure audit seuil.

L'identifiant, lorsque ledit signal de condamnation est inhibé, peut rester silencieux ou bien émettre un signal de présence identique au signal émis en réponse à un signal de requête reçu ou bien générer et émettre un signal de présence comportant une information caractéristique du fait que ledit signal de présence est émis en absence de la réception d'un signal de requête et en présence d'un niveau de bruit radioélectrique anormalement élevé dans le domaine de fréquences des signaux de requête.

Dans ce dernier cas l'équipement embarqué dans le véhicule comporte avantageusement des moyens pour extraire du signal de présence l'information caractérisant que ledit signal de présence est émis en absence de la réception d'un signal de requête afin de traiter cette information dans les algorithmes de condamnation qui peuvent prendre en compte d'autres paramètres.

Pour utiliser au mieux les propriétés de propagation des signaux radioélectriques, les signaux de requête sont de préférence émis dans une gamme de fréquences basses proche de 125 kHz et les signaux de présence et de condamnation sont de préférence émis dans une gamme de hautes fréquences proche de 433 MHz.La description détaillée de l'invention est faite en références aux figures qui représentent:

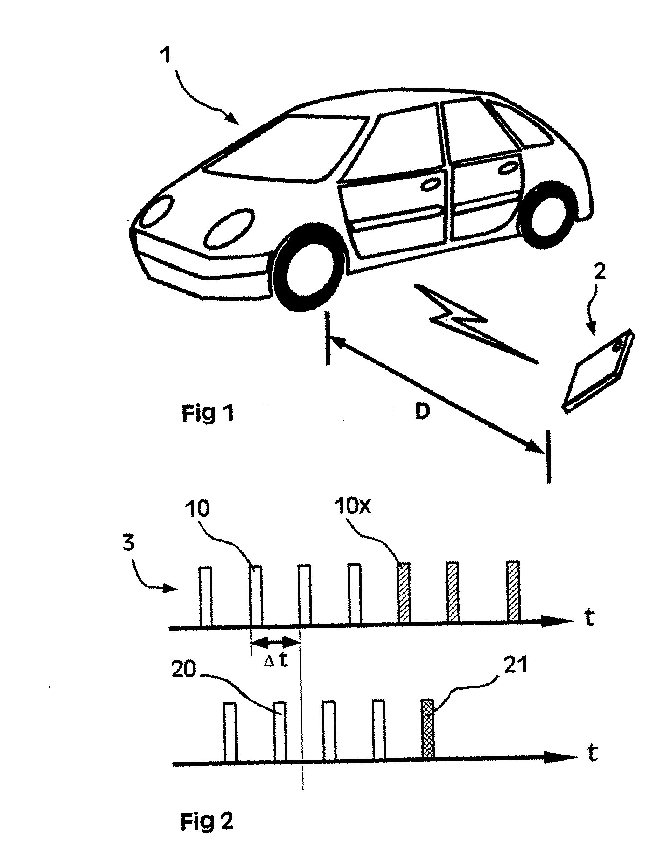

Figure 1 : principe général par détection de la proximité d'un identifiant d'un système de condamnation-décondamnation mains libres des issues d'un véhicule.
**Figure 2** : principe connu du fonctionnement d'un identifiant en mode transpondeur émettant des signaux en fonction des signaux reçus d'un système embarqué dans le véhicule.
**Figure 3** : évolution de l'intensité du signal de requête émis par l'équipement embarqué dans le véhicule reçu par l'identifiant en fonction de la distance entre l'identifiant et le véhicule et comparée à différents niveaux de bruit radioélectrique.
**Figures 4a, 4b et 4c** : chronogrammes respectivement des signaux de requête émis par un équipement embarqué dans le véhicule, de la mesure réalisée par l'identifiant de l'intensité du champ radioélectrique ambiant dans le domaine de fréquence des signaux de requête, des signaux de présence et ou de condamnation émis par l'identifiant, lorsque le champ mesuré est inférieur à un niveau seuil prédéterminé.
**Figures 5a, 5b et 5c** : chronogrammes respectivement des signaux de requête émis par un équipement embarqué dans le véhicule, des mesures réalisées par l'identifiant de l'intensité du champ radioélectrique ambiant dans le domaine de fréquence des signaux de requête, des signaux de présence et ou de condamnation émis par l'identifiant, lorsque le champ mesuré est temporairement supérieur à un niveau seuil prédéterminé.

Suivant l'invention, un véhicule 1 est équipé de manière classique d'un système mains libres de condamnation-décondamnation, comportant un équipement embarqué (non représenté) dans le véhicule 1 et au moins un identifiant 2 mobile par rapport au véhicule 1 dans lequel l'équipement embarqué émet, au cours d'une période de recherche, un premier signal périodique 10, dit signal de requête, destiné à être reçu par l'identifiant 2, ledit identifiant étant apte à émettre un second signal 20, dit signal de présence, et un troisième signal 21, dit signal de condamnation, destinés à être reçu par le système embarqué.

De préférence le premier signal 10 est émis, pour répondre aux normes et aux usages actuels, sur une gamme de fréquence dite LF proche de 125kHz et les second et troisième signaux sont émis sur une gamme de fréquence dite RF proche de 433MHz. Cependant d'autres fréquences de signaux radioélectriques peuvent être utilisées sans remettre en cause le principe de fonctionnement du dispositif et le procédé suivant l'invention.

Lorsque l'identifiant 2 est dans une zone où il reçoit le premier signal 10 de requête envoyé par l'équipement embarqué, c'est à dire à une distance D entre le véhicule 1 et l'identifiant 2 suffisamment petite pour recevoir un signal radioélectrique d'intensité suffisante pour être détectée, il émet un signal de présence 20.

En pratique le premier signal 10 de requête est émis à intervalles Δt réguliers pour constituer une trame 3 capable de stimuler l'identifiant 2 lorsque ledit identifiant se rapproche du véhicule et que la distance D devient inférieure à une distance Dmax en dessous de laquelle la réception du premier signal 10 de requête est possible.

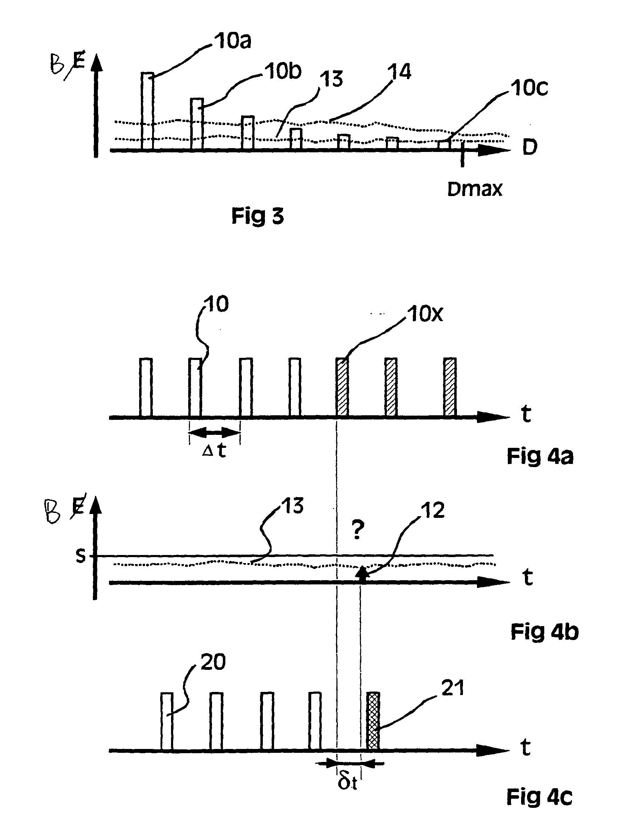

En effet comme illustré sur la figure 3, l'intensité B des signaux 10a, 10b, 10c reçus par l'identifiant 2 décroît lorsque la distance D entre l'identifiant et le véhicule augmente et sont trop faibles pour être reçus lorsque la distance D dépasse la valeur Dmax.

Le signal de présence 20, émis par l'identifiant 2 après chaque réception d'un signal de requête 10, est reçu de façon classique par le système embarqué qui en raison de la réponse de l'identifiant place ou maintien les issues du véhicule 1 en position de décondamnation.

En outre l'identifiant 2, qui est par nécessité doté des moyens pour recevoir les signaux émis par l'équipement embarqué, dispose des moyens pour mesurer l'intensité B du champ radioélectrique dans la gamme de fréquence des signaux de requête 10, par exemple dans la gamme LF, au niveau de l'antenne de l'identifiant 2.

Lorsque l'identifiant, qui recevait les signaux de requête 10, cesse de recevoir lesdits signaux de requête émis par le système embarqué, c'est-à-dire lorsque la durée maximale Δt prévue (en général par construction du dispositif) entre deux émissions successives de signaux de requête est dépassé d'une valeur limite δt sans qu'un signal de requête 10x ne soit reçu, l'identifiant mesure la valeur 12 du champ radioélectrique B qu'il reçoit dans la gamme de fréquence du signal de requête puis compare cette valeur 12 avec une valeur seuil S.

Lorsque la valeur mesurée 12 est inférieure à la valeur seuil S comme illustré sur la figure 4b, il convient de considérer que le niveau de bruit radioélectrique 13 est faible et donc n'est pas la cause de la non-réception des signaux 10x de requête. Dans ce cas l'identifiant 2 interprète l'absence de signal de requête comme un éloignement du véhicule 1 à une distance D supérieure à Dmax et émet un troisième signal 21 de condamnation, qui est interprétée par le dispositif embarqué comme une situation dans laquelle les issues du véhicule doivent être condamnées.

Bien évidement le système embarqué gère d'autres paramètres, comme par exemple la détection d'un second identifiant ou d'une issue ouverte, qui peuvent modifier le comportement final du système de condamnation. La gestion de ces situations particulières n'est pas l'objet de la présente invention.

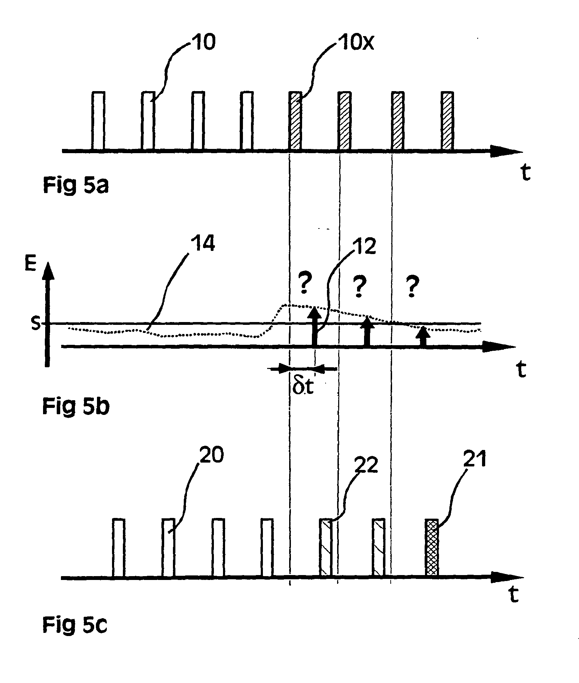

Lorsque la valeur 12 mesurée de l'intensité du champ radioélectrique B est supérieure à la valeur seuil S comme illustré sur la figure 5b, il convient de considérer que le niveau de bruit radioélectrique 14 est élevé et qu'il est susceptible de perturber la réception des signaux 10 de requête. La non-détection du signal de requête 10x dans l'intervalle de temps où ledit signal était attendu est donc la conséquence probable de l'apparition d'un niveau de bruit radioélectrique anormalement élevé prés de l'identifiant.

Suivant l'invention, au contraire de ce qu'aurait réalisé un système conventionnel, l'émission par l'identifiant 2 d'un signal de condamnation 21, qui aurait pour effet de provoquer la condamnation des issues par le dispositif embarqué alors même que l'identifiant 2 serait à une distance D du véhicule inférieure à Dmax dans le périmètre de détection normal, voir dans le véhicule lui-même où elle pourrait se trouver enfermée alors que le propriétaire serait sorti du véhicule, est inhibée.

Bien que le signal 10x attendu n'ait pas été détecté, l'identifiant émet un signal de présence 22 et un nouveau cycle est alors engagé jusqu'au moment où le signal de requête suivant est émis par le système embarqué.

Si le signal de requête 10 est à nouveau reçu par l'identifiant (cas non représenté), celui-ci émet à nouveau le signal de présence 20. Si le niveau de bruit mesuré devient inférieur au seuil S et qu'aucun signal de requête n'est recu, alors l'identifiant émet un signal de condamnation 21 comme présenté sur les figures 5a, 5b et 5c.

La mesure de l'intensité B du champ radioélectrique peut être réalisé de plusieurs manières. Dans un premier mode, la mesure est réalisée par l'identifiant 2 après la période pendant laquelle un signal de requête aurait du être reçue, de préférence un court délai δt après, et qu'il n'a pas été reçu.

Dans un second mode, la mesure de l'intensité B du champ radioélectrique dans la gamme de fréquence des signaux de requête est réalisé en continue ou avec une période d'échantillonnage égale ou inférieure à celle d'émission des signaux de requête. Suivant ce second mode, la valeur de l'intensité B du champ radioélectrique mesuré peut être estimé, par des méthodes conventionnelles de filtrage et de traitement du signal, au moment où le signal de requête aurait du être reçu.
La valeur S du seuil d'intensité du champ radioélectrique au-delà duquel l'identifiant inhibe l'émission du signal de condamnation est par exemple fixée par construction de l'identifiant. Pour une valeur trop petite de S, le signal de condamnation 21 sera inhibé en présence d'un niveau de bruit pouvant être faible (et >S) alors que l'identifiant est effectivement à une distance D supérieure à Dmax pour laquelle le signal de requête n'est normalement pas reçu et par là même interdire une condamnation qui doit avoir lieu. Pour une valeur trop grande de S, le signal de condamnation 21 sera émis par l'identifiant 2 malgré un niveau de bruit fort (et <S) qui masque le signal de requête à une distance D inférieure à Dmax pour laquelle le signal de requête aurait du être reçu.

Le risque principal qui doit être évité étant la condamnation des issues du véhicule alors que l'identifiant 2 se trouve dans le véhicule 1, avantageusement la valeur seuil S fixée par construction de l'identifiant est choisie en fonction de l'intensité du signal le plus faible susceptible d'être reçu par l'identifiant 2 à l'intérieur du véhicule 1. Par exemple la valeur de S est choisie entre 0,5 et 2 fois la valeur de l'intensité du signal de requête ayant cette plus faible valeur.

Lorsque l'identifiant 2 est à l'extérieur du véhicule 1, la valeur de l'intensité du signal de requête 10 voit son intensité décroître du fait de l'éloignement du véhicule et du fait que souvent l'intensité rayonnée est plus faible à l'extérieur qu'à l'intérieur du véhicule. Il est alors possible qu'un signal faible 10c qui aurait normalement du être reçu par l'identifiant 2 soit masqué par un niveau de bruit inférieur au seuil S et qu'un signal de condamnation soit émis par l'identifiant plutôt qu'un signal de présence, mais cette situation n'est, en pratique, pas critique car l'identifiant 2 n'est pas enfermé dans le véhicule 1.

Dans un autre mode de mise en oeuvre, la valeur seuil S est déterminée en fonction de signaux reçus de l'équipement embarqué et caractéristique du modèle de véhicule sur lequel est utilisé le dispositif. Ainsi l'identifiant 2 peut être réalisé en série indépendamment du modèle de véhicule sur lequel il sera finalement utilisé et la valeur du seuil S sera déterminée en fonction du modèle de véhicule de destination compte tenu des signaux reçus.

Dans les cas où l'identifiant 2 inhibe l'émission du signal de condamnation 21 en raison de la présence d'un bruit radioélectrique susceptible de masquer un signal de requête, l'identifiant 2 peut :
- soit émettre un signal de présence 20 comme si le signal de requête avait été reçu normalement;
- soit n'émettre aucun signal et continuer à attendre les conditions pour qu'un signal de requête soit détectable de façon sûre;
- soit émettre un signal de présence modifié 22 pour informer l'équipement embarqué de la non-réception du signal de requête 10 et de la présence d'un niveau de bruit radioélectrique anormalement élevé.

Dans tous ces cas, l'identifiant 2 n'émet de signal de condamnation 21 que lorsque le signal de requête n'est pas reçu et que le niveau de bruit radioélectrique est inférieur au seuil.

Dans les modes préférés de mise en oeuvre qui viennent d'être décrit, le procédé de condamnation-décondamnation des issues du véhicule 1 est mis en oeuvre avec un identifiant 2 comportant les moyens de mesure de l'intensité du champ radioélectrique dans la gamme de fréquences du signal de requête émis par l'équipement embarqué et comportant les fonctions logiques associées pour gérer l'émission du signal de condamnation. La technologie actuelle des circuits électroniques intégrés permet sans difficulté particulière de réaliser dans un identifiant de dimensions réduites la mesure de l'intensité des signaux radioélectriques reçus et le traitement numérique des données mesurées et des signaux à émettre.

Sauf si l'équipement embarqué utilise le contenu spécifique des signaux de présence 22, l'équipement embarqué ne nécessite pas de modifications par rapport à l'équipement des solutions connues, ce qui permet d'éviter les coûts de modifications dudit équipement embarqué, tant pour un nouveau système que pour une application de la solution à un système existant.

Lorsque la modification de l'équipement embarqué est admise, il est avantageux que l'identifiant 2 soit réalisé pour pouvoir émettre le signal de présence modifié 22.

Ce signal de présence modifié 22 peut porter une information caractéristique du niveau de bruit mesuré par l'identifiant. Dans ce cas l'équipement embarqué est informé de la présence d'un niveau de bruit radioélectrique élevé près de l'identifiant 2 ce qui permet de développer des stratégies spécifiques à mettre en oeuvre par l'équipement embarqué comme par exemple:
- agir sur la puissance d'émission des signaux de requête pour vérifier la réception desdites trames par l'identifiant en présence du bruit;
- informer par un signal visuel ou sonore l'utilisateur du véhicule de la situation particulière.

## Revendications

1. Procédé de condamnation-décondamnation mains libres des issues d'un véhicule (1) comportant :
a) l'émission par un équipement embarqué à bord du véhicule (1) d'un premier signal radioélectrique, dit signal de requête (10) ;
b) l'émission par un identifiant (2), mobile par rapport au véhicule (1), d'un second signal radioélectrique, dit signal de présence (20), en réponse à la réception du signal de requête (10) ;
c) l'émission par l'identifiant (2) d'un troisième signal radioélectrique, dit signal de condamnation (21), en absence de réception du signal de requête (10) dans un intervalle de temps où un tel signal de requête est attendu ;
d) au moins une mesure par l'identifiant (2) de l'intensité (12) du champ radioélectrique B reçu par ledit identifiant dans le domaine de fréquence du signal de requête (10) ;
**caractérisé en ce qu'**il comporte en outre:
e) l'inhibition de l'émission du signal de condamnation (21), c'est à dire la non-réalisation de l'étape c) du procédé, si l'intensité (12) du champ radioélectrique B est supérieure à une valeur seuil S lorsque le signal de requête (10) attendu n'est pas reçu.

2. Procédé suivant la revendication 1 dans lequel la mesure de l'intensité (12) du champ radioélectrique B est réalisée à l'expiration d'un délai δt pendant lequel un signal de requête (10x) attendu n'a pas été reçu par l'identifiant (2).

3. Procédé suivant la revendication 1 dans lequel l'intensité (12) du champ radioélectrique B comparée à la valeur seuil S est déduite d'une ou de plusieurs mesures de l'intensité du champ radioélectrique B effectuées avant l'expiration d'un délai δt pendant lequel un signal de requête (10x) attendu n'a pas été reçu par l'identifiant (2).

4. Procédé suivant l'une des revendications 1, 2 ou 3 dans lequel l'identifiant (2) émet un signal de présence (22) lorsque l'émission du signal de condamnation (21) est inhibée.

5. Procédé suivant la revendication 4 dans lequel le signal de présence (22) émis lorsque le signal de condamnation (21) est inhibé contient une information caractéristique du fait que le signal de présence (22) est émis en absence de réception d'un signal de requête (10x) et en présence d'un niveau de bruit anormalement élevé dans le domaine de fréquences du signal de requête.

6. Procédé suivant l'une des revendications 1 à 5 dans lequel la valeur seuil S de l'intensité (12) du champ radioélectrique B, au-dessus de laquelle l'émission du signal de condamnation (21) est inhibée, est fonction du contenu de signaux émis par

7. Dispositif de condamnation-décondamnation mains libres des issues d'un véhicule (1) comportant :
- un équipement embarqué dans le véhicule (1) apte à émettre un signal radioélectrique périodique dit signal de requête (10);
- au moins un identifiant mobile (2) par rapport au véhicule apte à recevoir le signal de requête, apte à émettre un signal radioélectrique dit signal de présence (20) en réponse à la réception d'un signal de requête (10) et apte à émettre au moins un signal radioélectrique dit signal de condamnation (21) lorsque l'identifiant (2) cesse de recevoir des signaux de requête (10),
- des moyens de mesure du champ radioélectrique B dans le domaine de fréquences des signaux de requête,
- des moyens pour comparer la valeur (12) du champ radioélectrique B mesuré avec une valeur seuil S, et
**caractérisé en ce que** l'identifiant mobile (2) comporte:
des moyens pour inhiber l'émission du signal de condamnation (21) lorsque ladite valeur du champ radioélectrique mesurée est supérieure audit seuil S, lorsqu'un signal de requête (10) attendu n'est pas reçu.

8. Dispositif suivant la revendication 7 dans lequel le au moins un identifiant (2) comporte des moyens pour calculer une valeur (12) du champ radioélectrique B à un instant donné à partir de mesures antérieures.

## Claims

1. Hands-free method of locking/unlocking the exits of a vehicle (1) comprising:
a) the transmission by a unit on board the vehicle (1) of a first radio frequency signal, called request signal (10);
b) the transmission by an identifying device (2), mobile relative to the vehicle (1), of a second radio frequency signal, called presence signal (20), in response to the reception of the request signal (10);
c) the transmission by the identifying device (2) of a third radio frequency signal, called a locking signal (21), if the request signal (10) is not received within a time interval within which such a request signal is expected;
d) at least one measurement by the identifying device (2) of the intensity (12) of the radio frequency field B received by said identifying device in the frequency domain of the request signal (10);
**characterized in that** it further comprises:
e) the inhibition of the transmission of the locking signal (21), that is, the noncompletion of the step c) of the method, if the intensity (12) of the radio frequency field B is greater than a threshold value S when the expected request signal (10) is not received.

2. Method according to Claim 1, wherein the intensity (12) of the radio frequency field B is measured on expiry of a time delay δt, during which an expected request signal (10x) has not been received by the identifying device (2).

3. Method according to Claim 1, wherein the intensity (12) of the radio frequency field B compared to the threshold value S is deduced from one or more measurements of the intensity of the radio frequency field B performed before the expiry of a time delay δt during which an expected request signal (10x) has not been received by the identifying device (2).

4. Method according to one of Claims 1, 2 or 3, wherein the identifying device (2) transmits a presence signal (12) when the transmission of the locking signal (21) is inhibited.

5. Method according to Claim 4, wherein the presence signal (22) transmitted when the locking signal (21) is inhibited contains an indication characteristic of the fact that the presence signal (22) is transmitted if a request signal (10x) is not received and if there is an abnormally high noise level in the frequency domain of the request signal.

6. Method according to one of Claims 1 to 5, wherein the threshold value S of the intensity (12) of the radio frequency field B, above which the transmission of the locking signal (21) is inhibited, depends on the content of signals transmitted by the unit on board the vehicle (1).

7. Hands-free device for locking/unlocking the exits of a vehicle (1), comprising:
- a unit on board the vehicle (1) suitable for transmitting a periodic radio frequency signal, called request signal (10);
- at least one identifying device (2), mobile relative to the vehicle suitable for receiving the request signal, suitable for transmitting a radio frequency signal called presence signal (20) in response to the reception of a request signal (10) and suitable for transmitting at least one radio frequency signal called locking signal (21) when the identifying device (2) stops receiving request signals (10),
- means of measuring the radio frequency field B in the frequency domain of the request signals,
- means for comparing the value (12) of the measured radio frequency field B with a threshold value S, and **characterized in that** the mobile identifying device (2) comprises:
- means for inhibiting the transmission of the locking signal (21) when said value of the measured radio frequency field is greater than said threshold S, when an expected request signal (10) is not received.

8. Device according to Claim 7, wherein the at least one identifying device (2) comprises means for calculating a value (12) of the radio frequency field B at a given instant, based on previous measurements.

## Patentansprüche

1. Verfahren zur freihändigen Verriegelung-Entriegelung von Ausgängen eines Fahrzeuges (1) umfassend
a) die Aussendung eines ersten Funksignals, genannt Eingabesignal (10), durch eine Bordausrüstung des Fahrzeuges,
b) die Aussendung eines zweiten Funksignals, genannt Anwesenheitssignal (20), als Antwort auf den Empfang eines Eingabesignals (10) durch einen in Bezug zum Fahrzeug beweglichen Identifizierer (2),
c) die Aussendung eines dritten Funksignals durch den Indentifizierer (2), genannt Verriegelungssignal, in Abwesenheit des Empfangs eines Eingabesignals (10) innerhalb eines Zeitintervalls, in dem ein solches Eingabesignal erwartet wird,
d) mindestens eine Messung der Intensität des radioelektrischen Feldes (B) durch den Indentifizierer (2), empfangen durch den besagten Intentifizierer innerhalb des Frequenzbereichs des Eingabesignals (10), **dadurch gekennzeichnet, dass** dieses des weiteren umfasst;
e) eine Aussendungssperre des Verriegelungssignals (21), das heißt die Nicht-Durchführung der Phase c) des Verfahrens, wenn die Intensität (12) des radioelektrischen Feldes oberhalb eines Schwellwertes S liegt, wenn das erwartete Empfangsignal (10) nicht empfangen wird.

2. Verfahren nach Anspruch 1, in dem die Messung der Intensität des radioelektrischen Feldes (B) mit Ablauf einer Zeitspanne δt realisiert wird, wenn das erwartete Eingangssignal (10x) nicht durch den Identifizierer empfangen wurde.

3. Verfahren nach Anspruch 1, in dem die Intensität (12) des radioelektrischen Feldes (B), die mit einem Schwellwert verglichen wird, aus einem oder mehreren getätigten Messungen der Intensität des radioelektrischen Feldes (B) vor Ablauf der Zeitspanne δt entnommen wird, wenn das erwartete Eingangssignal (10x) nicht durch den Identifizierer empfangen wurde.

4. Verfahren nach einem der Ansprüche 1, 2 oder 3, in dem der Identifizierer (2) ein Anwesenheitssignal (22) emittiert, wenn die Aussendung des Verriegelungssignals (21) gehemmt ist.

5. Verfahren nach Anspruch 4, in dem, wenn das Verriegelungssignal (21) gehemmt ist, das emittierte Anwesenheitssignal (22) eine charakteristische Information des Ereignisses enthält, das das Anwesenheitssignal (22) in Abwesenheit eines Empfangs eines Eingangssignals (10x) und in Anwesenheit eines unnormal erhöhten Rauschpegels in dem Frequenzbereich des Eingangssignals emittiert ist.

6. Verfahren nach einem der Ansprüche 1 bis 5, in dem der Schwellwert (S) der Intensität des radioelektrischen Feldes (B), oberhalb dessen die Aussendung des Verneglungssignals (21) gehemmt wird, vom Inhalt der von der Bordausrüstung des Fahrzeuges (1) ausgestrahlten Signale abhängt.

7. Vorrichtung zur freihändigen Verriegelung-Entriegelung von Ausgängen eines Fahrzeuges (1) umfassend
- eine Bordausrüstung im Fahrzeug (1), die dazu ausgebildet ist, ein periodisches Funksignal auszustrahlen, genannt Eingabesignal (10),
- mindesten einen in Bezug zum Fahrzeug beweglichen Identifizierer (2), der dazu ausgebildet ist, das Eingabesignal zu empfangen, und ein Funksignal, genannt Anwesenheitssignal (20), als Antwort auf den Empfang eines Eingabesignals (10) zu emittieren, und mindestens ein Funksignal, genannt Verriegelungssignal (21), auszustrahlen, wenn der Identifizierer (2) aufhört, Eingabesignale (10) zu empfangen,
- Mittel zum Messen des radioelektrischen Feldes (B) in einem Frequenzbereich des Eingabesignals,
- Mittel zum Vergleichen des gemessenen Wertes (12) des Rundfunkfeldes (B) mit einem Schwellwert (S), und
- **dadurch gekennzeichnet, dass** der bewegliche Identifizier (2) Mittel zum Hemmen der Ausstrahlung des Verrieglungssignals umfasst, wenn der besagte gemessene Wert des radioelektrischen Feldes größer als der Grenzwert (S) ist, wenn das erwartete Eingabesignal (10) nicht empfangen wird.

8. Vorrichtung nach Anspruch 7, bei der der mindestens eine Identifizierer (2) Mittel zur Berechnung eines Wertes (12) des radioelektrischen Feldes B zu einem gegebenen Zeitpunkt aufgrund vorheriger Messungen enthält.
